# EUROPÄISCHE PATENTSCHRIFT

(11) **EP 1 014 060 B1**
(45) Veröffentlichungstag und Bekanntmachung des Hinweises auf die Patenterteilung: **09.07.2014**
(21) Anmeldenummer: 99124704.0
(22) Anmeldetag: 11.12.1999
(51) Int. Cl.: G01K 7/22

(54) **Temperaturgeber**
Temperature measuring device
Dispositif de mesure de la température

(30) Priorität: 23.12.1998 DE 19860109
(43) Veröffentlichungstag der Anmeldung: 28.06.2000
(73) Patentinhaber: Continental Automotive GmbH, 30165 Hannover (DE)
(72) Erfinder: Schimmel, Ralf, 35789 Weilmünster (DE); Acht, Joachim, 65936 Frankfurt (DE)

(56) Entgegenhaltungen:
- EP-A- 0 064 798
- DE-A- 4 227 578
- DE-A- 4 241 242
- GB-A- 2 083 231

## Beschreibung

Die Erfindung betrifft einen Temperaturgeber mit einem Temperatursensor in einem hülsenförmigen Gehäuse.

Temperaturgeber der gattungsgemäßen Art werden beispielsweise in der Fahrzeugausrüstung für Meß- und Regelaufgaben eingesetzt. Hierbei müssen sie neben den jeweiligen spezifischen Eigenschaften für ihren Einsatz verschiedene Grundanforderungen wie gute Langzeitstabilität, hohe Meßgenauigkeit und kostengünstigen Aufbau erfüllen. Es werden daher ständig Anstrengungen unternommen den Bauteil- und Montageaufwand zu verringern ohne dabei Einbußen im Betriebsverhalten der Temperaturgeber hinnehmen zu müssen. Insbesondere müssen dabei wärmetechnische Größen wie Wärmeleitfähigkeit und Wärmekapazität beachtet werden.

Aus DE 77 129 51 U1 ist ein elektrisches Widerstandsthermometer mit einem hülsenförmigen Gehäuse bekannt, in dem ein temperaturabhängiger Meßwiderstand angeordnet ist. Durch zwei im Gehäuse zum Meßwiderstand führende Kontaktleiter ist der Meßwiderstand elektrisch leitend mit dem Kontaktsockel verbunden. Der Meßwiderstand und die Kontaktleiter sind dabei jeweils in einem von mehreren im Gehäuse ausgebildeten Kanälen angeordnet.

Die Anbringung der Zuleitungen an den Meßfühler und die Einführung der Zuleitung in die Kanäle des Gehäuses, sowie die Maßnahmen zum Schutz der Zuleitungen vor schädigenden Einflüssen sind aufwendig und kostenintensiv.

Weiterhin ist aus DE 37 29 076 A1 ein Temperaturfühler mit einem Widerstandselement bekannt, bei dem zum Schutz der Zuleitungen von den Anschlußkontakten zum Widerstandselement vor Schwingungen der Raum innerhalb des Fühlergehäuses mit einem isolierenden Pulver gefüllt ist. Das Einbringen des Pulvers bedeutet einen zusätzlichen Arbeitsschritt und setzt das Vorhandensein von kostenverursachenden Einfüllöffnungen, Verschlüssen und Dichtungen voraus. Darüber hinaus ist auch der Einbau des mit Kontaktleitern versehenen Widerstandselements kompliziert und aufwendig.

DE 34 00 964 A1 offenbart ein Halbleiter-Widerstandselement in einem rohrförmigen Gehäuse, wobei ein oder zwei zentralwirkende Druckfedern das Widerstandselement an den Boden des rohrförmigen Gehäuses andrücken bzw. kontaktieren. Die Druckfedern wirken auch als Zuleitungen und erlauben damit eine einfache Montage. Die metallischen Druckfedern haben jedoch eine relativ große Wärmekapazität und gute Wärmeleitfähigkeit, so daß der bekannte Temperaturgeber eine relativ große thermische Zeitkonstante aufweist. Eine Verbesserung hierzu stellt der Temperaturgeber gemäß DE 42 27 578 A1 dar, bei dem die Kontaktleiter als streifenförmige Kontaktschienen ausgebildet sind, die federnd am Meßwiderstand anliegen und diesen kontaktieren. Auch diese technische Lösung weist noch relativ viele zu montierende Einzelteile auf, so daß hohe Fertigungskosten entstehen.

Aufgabe der vorliegenden Erfindung ist es dem gegenüber einen Temperaturgeber mit einem Temperatursensor in einem Gehäuse anzugeben, der einfach montierbar ist, wobei die Fertigungskosten für den Temperaturgeber minimiert werden sollen.

Die vorstehende Aufgabe wird durch einen Temperaturgeber nach dem Anspruch 1 gelöst, indem der Temperatursensor, die Kontaktleiter und der Kontaktsockel ein vorgefertigtes Sensormodul bilden, das in dem hülsenförmigen Gehäuse durch Kraft-, Form- und/oder Stoffschluß im Bereich des Kontaktsockel des vorgefertigten Sensormoduls fixiert ist und wobei das Sensormodul in dem Gehäuse im Bereich des Kontaktsockels durch eine umlaufende Nut des Gehäuses fixiert ist, die durch Warmeindrücken erzeugt ist.

Durch die erfindungsgemäßen Maßnahmen ergibt sich der Vorteil mit nur zwei Arbeitsschritten, nämlich Einlegen des vorgefertigten Sensormoduls, bestehend aus Temperatursensor, Kontaktleiter und Kontaktsockel, in das Gehäuse und Fixieren des eingelegten Sensormoduls durch Kraft-, Form- und/oder Stoffschluß einen kompletten Temperaturgeber zu bilden. Dadurch daß nicht mehrere einzelne Bauteile, wie beispielsweise der Temperatursensor oder die Kontaktleiter, nacheinander in das Gehäuse eingeführt und positioniert werden müssen, entfällt die Notwendigkeit von Führungselementen innerhalb des Gehäuses weitgehend, was die Gestaltung des Gehäuses vereinfacht und dementsprechend die Kosten für das Gehäuse reduziert. Die modulare Bauweise des Temperaturgebers enthält also einen großen Kostenvorteil und ist insbesondere für die automatisierte Fertigung geeignet.

Vorteilhafte Weiterbildungen und Ausgestaltungen der Erfindung ergeben sich aus den Unteransprüchen.

Vorteilhafterweise ist die kraft-, form- und/oder stoffschlüssige Fixierung des vorgefertigten Sensormoduls im Gehäuse durch Einschrauben, Einklemmen, Verkleben, Verschweißen und/oder durch Warmverformen, wie beispielsweise Warmeindrücken oder Warmverstemmen, ausgeführt. Eine einfache Fixierung durch Einklemmen oder Einschrauben mit kurzem Einschraubweg kann dabei genügen, solange damit ausreichende Dichtheit von der Steckeranschlußseite her gegeben ist. Im Einzelfall kann darüber hinaus ein Dichtring zwischen vorgefertigtem Sensormodul und Gehäuse im Bereich des Kontaktsockels erforderlich sein.

Bei der Auswahl des Temperatursensors hat es sich als zweckmäßig herausgestellt dafür einen temperaturabhängigen Widerstand mit negativem oder positivem Temperaturkoeffizienten zu verwenden. Derartige Meßwiderstände bieten eine hohe Meßgenauigkeit und gute Langzeitstabilität.

Zur Verbesserung des Wärmeübergangs vom Prüfraum über die Gehäusemeßspitze auf den Temperatursensor hat es sich bewährt, die Meßspitze vor dem Einlegen des Sensormoduls mit Wärmeleitpaste zu füllen. Der Temperatursensor an der Spitze des Sensormoduls taucht beim Einlegen dieses Bauteils in das Gehäuse in die Wärmeleitpaste ein. Temperaturänderungen im Prüfraum werden durch diese Maßnahme schneller vom Temperatursensor erfaßt und können dementsprechend schnell für Regelungszwecke weiterverarbeitet werden.

Eine weitere vorteilhafte Ausgestaltung der Erfindung besteht darin, das Gehäuse an seiner Innenfläche mit einem Mittel zur Lagefixierung des Sensormoduls, insbesondere des Kontaktsockels zu versehen. Dies kann dadurch erfolgen, daß die Innenkontur an dem der Meßspitze entgegengesetzten Ende des Gehäuses an die Außenkontur des Kontaktsockelbereiches am Sensormodul angepaßt ist. Weist der Kontaktsockelbereich beispielsweise einen im wesentlichen rechteckigen Querschnitt auf, so bietet es sich an, das Gehäuses zumindest an der Fügestelle ebenfalls mit einer entsprechenden Rechteck-Innenkontur zu versehen.

Als Material für das Gehäuse haben sich sowohl Kunststoffe als auch verschiedene Metalle oder Metallegierungen bewährt. In diesem Zusammenhang sind beispielsweise PA-Kunststoffe (Polyamid), sowie als Metallegierung Messing zu nennen. Wichtige Materialeigenschaften sind gute Temperatur- und Korrosionsbeständigkeit. Das Gehäuse kann im Ganzen aus dem jeweiligen Material oder aus einer Kombination von Kunststoff und Metall aufweisenden Bereichen hergestellt sein. Von Bedeutung im Zusammenhang mit der Materialauswahl sind weiter die potentiellen Möglichkeiten hinsichtlich der Fügeverfahren für das einzulegende Sensormodul.

Es hat sich weiterhin als zweckmäßig erwiesen das Gehäuse von vornherein mit einer Möglichkeit zur Halterung des Temperaturgebers im Prüfraum zu versehen. Das Gehäuse weist daher an seinem äußeren Umfang eine Klip- und/oder Schraubanbindung auf. Ist ein sicheres Abdichten des Prüfraums von der Umgebung erforderlich, so wird beim Anklipsen oder Anschrauben des Temperaturgebers ein Dichtring an der Verbindungsstelle zum Prüfraum eingelegt. In besonders gelagerten Fällen kann aber ein einfacher Reibschluß zwischen Temperaturgebergehäuse und der Wandung des Prüfraumes zur Halterung des Temperaturgebers ausreichen. Zusätzlich erforderliche Teile, wie beispielsweise ein Flansch und eine Überwurfmutter, können in der Regel entfallen, was einen weiteren Einsparungseffekt für die Fertigung und den Einsatz bedeutet.

Nachfolgend wird die Erfindung anhand eines Ausführungsbeispiels mit Hilfe von Zeichnungen erläutert. Dabei zeigt
- Figur 1: den kompletten Temperaturgeber im teilweisen Längsschnitt mit Gehäuse und Sensormodul;
- Figur 2: die Draufsicht auf das Sensormodul;
- Figur 3: das Gehäuse im Längsschnitt.

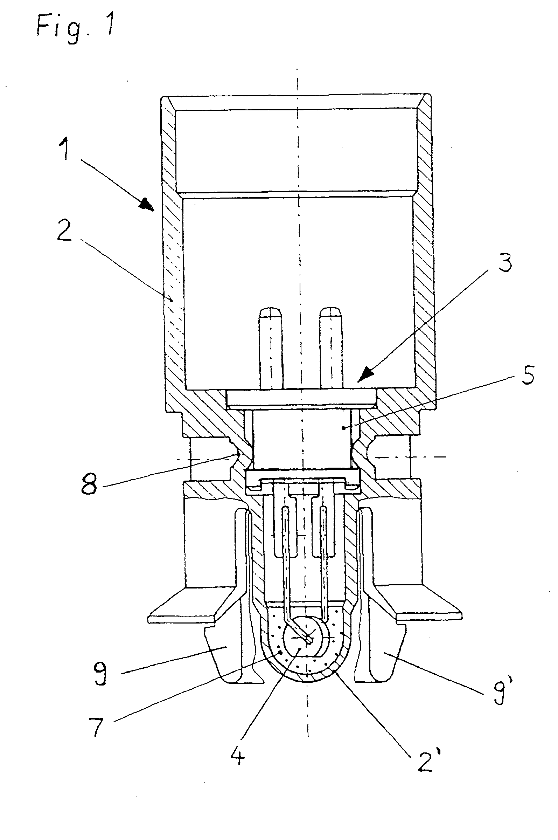

Gemäß Figur 1 wird der erfindungsgemäße Temperaturgeber **1** durch ein längliches, in seiner Grundform hülsenförmiges Gehäuse **2** mit einem darin koaxial angeordneten Sensormodul **3** gebildet. Das Sensormodul **3** ist ein vorgefertigtes Bauteil, das an einem Ende einen Temperatursensor **4** und am entgegengesetzten Ende einen Kontaktsockel **5** mit Steckanschlüssen **6** aufweist. In die Meßspitze **2'** des Gehäuses **2**, die beim Einsatz in den Prüfraum ragt, ist etwas Wärmeleitpaste **7** eingebracht, in die der Temperatursensor **4** eintaucht. Das Sensormodul **3** ist in dem Gehäuse **2** im Bereich des Kontaktsockels **5** durch eine umlaufende Nut **8** fixiert, die durch Warmeindrücken erzeugt ist. Hierdurch wird auch beim Abziehen eines Steckers der feste Sitz des Sensormoduls **3** im Gehäuse **2** gewährleistet und das steckerseitige Eindringen von Feuchtigkeit verhindert. Zur Anbindung des Temperaturgebers **1** an einem Prüfraum weist das Gehäuse **2** an seinem äußeren Umfang in radialer Richtung flügelartige Klipse **9**, **9'** auf. Das Gehäuse **2** besteht aus einem Polyamid-Kunststoff

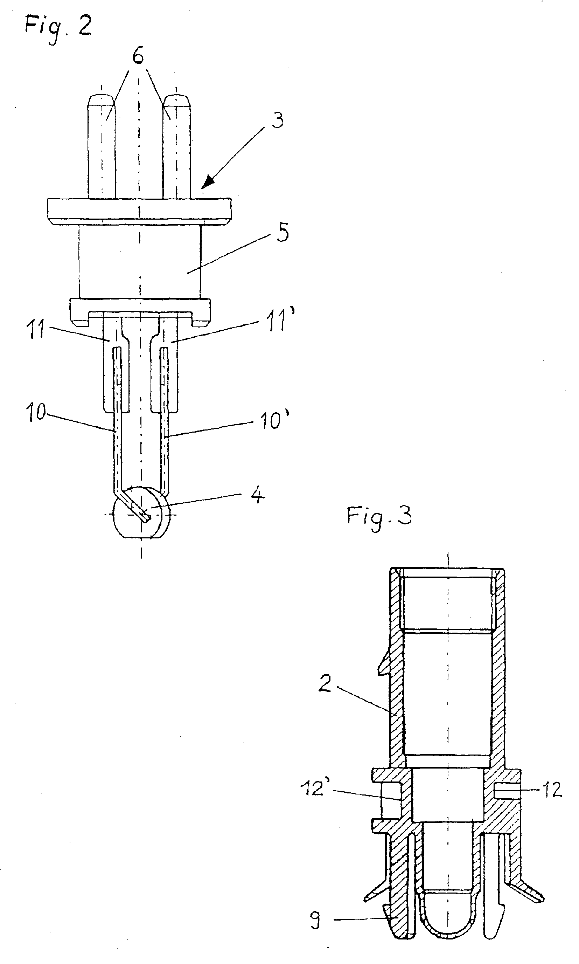

Das Sensormodul **3** ist im Einzelnen als vorgefertigtes Bauteil in Figur 2 dargestellt. Der Temperatursensor **4** an einem Ende des Sensormoduls **3** ist ein Meßwiderstand mit negativem Temperaturkoeffizienten (NTC), der sich für viele Anwendungen bewährt hat. Er ist in Form einer Tablette oder runden Scheibe ausgebildet und hat zwei Anschlußdrähte **10**, **10'**, die jeweils an Kontaktleitern **11**, **11**' angeschweißt oder angelötet sind. Die beiden Kontaktleiter **11**, **11**' aus Bronze führen in den Kontaktsockel **5**, der mit Steckanschlüssen **6** versehen ist. Der Kontaktsockel **5** selbst besteht aus elektrisch isolierenden Kunststoffmaterial.

Figur 3 betrifft allein das Gehäuse **2**. Es weist vom Steckerende zur Meßspitze **2'** hin abnehmende Innendurchmesser auf, die auf die Außenkontur des Sensormoduls **3** so abgestimmt sind, daß insbesondere im Bereich des Kontaktsockels **5** des einzuführenden Sensormoduls **3** eine Vorfixierung gegeben ist. Ein Werkzeug zum Warmeindrücken oder Warmverstemmen eines einzulegenden Sensormoduls **3** im Bereich des Kontaktsockels **5** kann an Ausnehmungen **12**, **12'** am äußeren Umfang des Gehäuses **2** eingreifen. Weiterhin sind an dem Gehäuse **2** gemäß Figur 3 in der Nähe der Meßspitze **2'** des Gehäuses **2** flügelartige Klipse **9, 9'** zu sehen, die die Anbindung des Gehäuses **2** bzw. des fertigmontierten Temperaturgebers **1** an den Prüfraum gewährleisten.

## Patentansprüche

1. Temperaturgeber mit einem Temperatursensor in einem hülsenförmigen Gehäuse, das einen Kontaktsockel mit Anschlußkontakten und eine in den Prüfraum eintauchende Meßspitze aufweist, wobei der Temperatursensor in der Meßspitze des Gehäuses angeordnet ist und über Kontaktleiter mit dem Kontaktsockel des Gehäuses verbunden ist, wobei Temperatursensor (4), Kontaktleiter (11,11') und Kontaktsockel (5) ein vorgefertigtes Sensormodul (3) bilden, das in dem hülsenförmigen Gehäuse (2) durch Kraft-, Form- und/oder Stoffschluß im Bereich des Kontaktsockels (5) des vorgefertigten Sensormoduls (3) fixiert ist, und wobei das Sensormodul (3) in dem Gehäuse (2) im Bereich des Kontaktsockels (5) durch eine umlaufende Nut (8) des Gehäuses fixiert ist, die durch Warmeindrücken erzeugt ist.

2. Temperaturgeber nach Anspruch 1, **dadurch gekennzeichnet, daß** die Fixierung des vorgefertigten Sensormoduls (3) in dem Gehäuse (2) durch Einschrauben, Einklemmen, Verkleben, Verschweißen und/oder durch Warmverformen erfolgt.

3. Temperaturgeber nach Anspruch 1 oder 2, **dadurch gekennzeichnet, daß** der Temperatursensor (4) ein temperaturabhängiger Widerstand mit negativem oder positivem Temperaturkoeffizienten ist.

4. Temperaturgeber nach einem der Ansprüche 1 bis 3**, dadurch gekennzeichnet, daß** die Meßspitze (2') des Gehäuses (2) soweit mit Wärmeleitpaste (7) gefüllt ist, daß zumindest der Temperatursensor (4) von ihr umgeben ist.

5. Temperaturgeber nach einem der Ansprüche 1 bis 4, **dadurch gekennzeichnet, daß** das Gehäuse (2) ein Mittel zu Lagefixierung des vorgefertigten Sensormoduls (3) aufweist.

6. Temperaturgeber nach einem der Ansprüche 1 bis 5, **dadurch gekennzeichnet, daß** das Gehäuse (2) ein temperatur- und korrosions-beständiges Kunststoff- oder Metallgehäuse umfaßt.

7. Temperaturgeber nach einem der Ansprüche 1 bis 6, **dadurch gekennzeichnet, daß** das Gehäuse (2) an seinem äußeren Umfang eine Klip- (9; 9') und/oder Schraubanbindung aufweist.

## Claims

1. Temperature transmitter with a temperature sensor in a sleeve-shaped housing, which has a contact socket with terminal contacts and a measuring tip entering into the testing chamber, the temperature sensor being arranged in the measuring tip of the housing and connected via contact conductors to the contact socket of the housing, **characterized in that** the temperature sensor (4), contact conductors (11, 11') and contact socket (5) forming a prefabricated sensor module (3) which is fixed in the sleeve-shaped housing (2) by positive, non-positive and/or integral engagement in the region of the contact socket (5) of the prefabricated sensor module (3); and the sensor module (3) being fixed in the housing (2) in the region of the contact socket (5) by a peripheral groove (8) of the housing, which is produced by hot impressing.

2. Temperature transmitter according to Claim 1, **characterized in that** the fixing of the prefabricated sensor module (3) in the housing (2) is carried out by screwing in, clamping in, adhesive bonding, welding and/or by hot forming.

3. Temperature transmitter according to Claim 1 or 2, **characterized in that** the temperature sensor (4) is a temperature-dependent resistor with a negative or positive temperature coefficient.

4. Temperature transmitter according to one of Claims 1 to 3, **characterized in that** the measuring tip (2') of the housing (2) is filled with heat transfer compound (7) to the extent that at least the temperature sensor (4) is surrounded by it.

5. Temperature transmitter according to one of Claims 1 to 4, **characterized in that** the housing (2) has a means for positionally fixing the prefabricated sensor module (3).

6. Temperature transmitter according to one of Claims 1 to 5, **characterized in that** the housing (2) comprises a temperature- and corrosion-resistant plastic or metal housing.

7. The temperature transmitter according to one of Claims 1 to 6, **characterized in that** the housing (2) has on its outer periphery a clip- (9; 9') and/or screw-type means of attachment.

## Revendications

1. Indicateur de température comprenant un capteur de température dans un boîtier en forme de manchon, qui a un culot de contact ayant des contacts de borne et une pointe de mesure plongeant dans un espace de contrôle, le capteur de température étant monté dans la pointe de mesure du boîtier et étant relié par des conducteurs de contact au culot de contact du boîtier, dans lequel le capteur (4) de température, des conducteurs (11, 11') de contact et le culot (5) de contact forment un module (3) de capteur préfabriqué, qui est immobilisé dans le boîtier (2) en forme de manchon par complémentarité de force, de forme et/ou de matière dans la région du culot (5) de contact du module (4) de capteur préfabriqué et dans lequel le module (3) de capteur est immobilisé dans le boîtier (2) dans la région du culot (5) de contact par une rainure (8) du boîtier, qui fait le tour et qui est produite par enfoncement à chaud.

2. Indicateur de température suivant la revendication 1, **caractérisé en ce que** l'immobilisation du module (3) de capteur préfabriqué dans le boîtier (2) s'effectue par vissage, par serrage, par collage, par soudage et/ou par déformation à chaud.

3. Indicateur de température suivant la revendication 1 ou 2, **caractérisé en ce que** le capteur (4) de température, est une résistance qui dépend de la température ayant un coefficient de température négatif ou positif.

4. Indicateur de température suivant l'une des revendications 1 à 3, **caractérisé en ce que** la pointe (2') de mesure du boîtier (2) est emplie tellement d'une pâte (7) conductrice de la chaleur qu'au moins le capteur (4) de température en est entouré.

5. Indicateur de température suivant l'une des revendications 1 à 4, **caractérisé en ce que** le boîtier (2) a un moyen d'immobilisation en position du module (3) de capteur préfabriqué.

6. Indicateur de température suivant l'une des revendications 1 à 5, **caractérisé en ce que** le boîtier (2) comprend un boîtier en matière plastique ou en métal qui résiste à la température et à la corrosion.

7. Indicateur de température suivant l'une des revendications 1 à 6, **caractérisé en ce que** le boîtier (2) a, sur son pourtour extérieur, une attache par agrafe (9, 9') et/ou par vis.
